# EUROPÄISCHE PATENTANMELDUNG

(11) **EP 2 398 109 A1**
(43) Veröffentlichungstag der Anmeldung: **21.12.2011**
(21) Anmeldenummer: 11170132.2
(22) Anmeldetag: 16.06.2011
(51) Int. Cl.: H01M 10/50, F28F 3/12

(54) **Wärmetauscher und Verfahren zum Herstellen eines Wärmetauschers**

(30) Priorität: 16.06.2010 DE 102010030155
(71) Anmelder: Behr GmbH & Co. KG, 70469 Stuttgart (DE)
(72) Erfinder: Ludwig, Lars, 73733 Esslinger (DE); Schroth, Holger, 75433 Maulbronn (DE)
(74) Vertreter: Grauel, Andreas

(57) **Zusammenfassung**

Die vorliegende Erfindung betrifft einen Wärmetauscher zur Kühlung mindestens einer Energiespeicherzelle (220), mit einer ersten Gehäusefläche (102) mit mindestens einer ersten Öffnung und einer zweiten Gehäusefläche (202) mit mindestens einer zweiten Öffnung, wobei die zweite Gehäusefläche (202) der ersten Gehäusefläche (102) und die zweite Öffnung der ersten Öffnung gegenüberliegend angeordnet sind. Mindestens ein Schachtprofil (435) ist mit einem umlaufenden Randbereich der ersten Öffnung und der zweiten Öffnung verbunden und erstreckt sich zwischen der ersten und der zweiten Gehäusefläche (102, 202), um eine Wand eines Aufnahmeschachts für eine Energiespeicherzelle (220) zu bilden. Dabei weist das Schachtprofil (435) in einem zwischen der ersten und der zweiten Gehäusefläche (102, 202) liegenden Bereich eine elastische Wölbung in Richtung eines Inneren des Aufnahmeschachts auf.

## Beschreibung

Die vorliegende Erfindung bezieht sich auf einen Wärmetauscher und auf ein Verfahren zum Herstellen eines Wärmetauschers, der beispielsweise zur Kühlung von Energiespeicherzellen eingesetzt werden kann.

Bei der effektiven Nutzung kleinformatiger Energiespeicher, beispielsweise auf Lithium-Ionen Basis, im Folgenden auch mit Zelle bezeichnet, besteht das Problem, dass zur Aufrechterhaltung der maximalen Lebensdauer die Zelle innerhalb eines Temperaturfensters betrieben werden muss. Bisherige Lösungen für Energiespeicher basieren auf einem massiven, kühlmitteldurchfluteten Bauteil mit entsprechender Kälteleistung. Die Kühlung der Zellen ist damit durch einen Kühligel oder eine Kühlplatte mit oder ohne Kühlblechen möglich.

Bei dem Kühligel können die Zellen in vorgesehene Einschub-Taschen zwischen den kühlmitteldurchfluteten "Stacheln" des Kühligels eingeschoben und fixiert werden. Der Kühligel ist sehr massiv und damit sehr schwer. Weiterhin haben die Einschubtaschen ein geringes Übermaß aus Gründen der Prozesssicherheit. Aufgrund dieser notwendigen Toleranz verschlechtert sich der auf thermischen Kontakt basierte Wärmeübergang deutlich.

Bei der Kühlplatte, ohne Kühlbleche können die Zellen auf eine mit Kühlmittelkanälen durchzogene Kühlplatte aufgestellt und gesondert fixiert werden. Dabei werden die Zellen nur am Boden des Hard-Case gekühlt. Diese einseitige Kühlung führt zu hohen Temperaturunterschieden innerhalb der Zelle. Die Ausführungsformen der Kühlplatte mit und ohne Kühlbleche sind aufgrund des hohen Gewichts der Kühlplatte schwer und benötigen zusätzliche Befestigungs- und Verspann-Elemente. Eine Gewichtreduzierung durch Weglassen der Verspann-Elemente würde zu einem deutlich reduzierten Wärmeübergang führen und so die Effektivität der Kühlung herabsetzen.

Bei der Kühlplatte mit Kühlblechen werden auf eine mit Kühlmittelkanälen durchzogene Kühlplatte dünnwandige L- bzw. T-Profile aufgespannt, welche die Kälteleistung von der Kühlplatte zu den Zellen transportieren, die sich im "Sandwich" der Kühlbleche befinden. Dabei kann durch eine optimierte Gestaltung der Kühlbleche der Temperaturunterschied in der Zelle im Vergleich zu der Ausführungsform ohne Kühlplatte deutlich reduziert werden. Allerdings erhöht sich durch die Kühlbleche und den erhöhten Aufwand für die Fixierung und Verspannung von Blechen und Zellen auch das Gewicht deutlich. Auch werden für diese Lösung zwei thermische kontaktbasierte Schnittstellen benötigt. Bei dem Kühligel und der Ausführungsform ohne Kühlplatte wird lediglich eine benötigt. Thermische Kontakte stellen immer erhöhte Anforderungen bzgl. Toleranz, Oberflächenbeschaffenheit und Steifigkeit dar, um einen guten thermischen Übergangskoeffizienten sicherzustellen.

Es ist die Aufgabe der vorliegenden Erfindung einen verbesserten Wärmetauscher und ein verbessertes Verfahren zum Herstellen eines Wärmetauschers zu schaffen.

Diese Aufgabe wird durch einen Wärmetauscher und ein Verfahren zum Herstellen eines Wärmetauschers gemäß den unabhängigen Patentansprüchen gelöst.

Der vorliegenden Erfindung liegt die Erkenntnis zugrunde, dass sich gewölbte Schachtprofile eignen, um Energiezellen thermisch mit einem Wärmetauscher zu verbinden. Auf diese Weise kann ein Einschubkühler auf Basis gewölbter Schachtprofile geschaffen werden. Der Einschubkühler eignet sich als Kühler zur Kühlung von Energiespeichersystemen. Dazu werden die Energiespeicherzellen in den Kühler gesteckt. Dabei drücken die Schachtprofile gegen die Zellen und bilden somit einen Wärmeübergang zur Zelle. Es ergibt sich eine einfache und leichte Bauweise für die Kühlkomponenten von Zellen bei gleichzeitiger Gewährleistung einer effektiven und sicheren Kühlung. Zusätzlich enthält die Konstruktion entweder alle Funktionen bezüglich Verbindung und Verspannung von Kühlkomponente und Zellen direkt oder ermöglicht dazu zumindest einfache Lösungen.

Die erfindungsgemäße Konstruktionsweise ist sehr kompakt und ermöglicht eine effektive Kühlung prismatischer Zellen mit Metallgehäuse. Der gute Wirkungsgrad wird dadurch erreicht, dass die einzige thermische Schnittstelle zwischen Schachtprofil und Zellgehäuse durch die Zwängung des elastisch verformten Schachtprofils einen sehr guten Wärmeübergang aufweist. Weiterhin kann die Position der Kühlung über die Zellhöhe variabel eingestellt werden bzw. sogar durch eine zusätzliche Bodenkühlung der Zellen ergänzt werden. Ein weiterer Vorteil besteht in der geschlossenen Lösung, da es sich um lediglich ein Produkt handelt, welches ohne weitere Spezialteile oder Spezialwerkzeuge in jeder Umgebung montiert werden kann. Der Zugriff auf die Zellen wird nicht durch die Modulbauweise erschwert. Einzelne Zellen können leicht ausgetauscht werden.

Der erfindungsgemäße Wärmetauscher kann für kleinformatige Energiespeicher, beispielsweise auf Lithium-Ionen Basis, eingesetzt werden. Die aufgrund der Verlustleistung beim Laden bzw. Entladen im Inneren der Zelle kontinuierlich generierte Wärmemenge, die der Verlustleistung der Zelle entspricht, kann über die Schachtprofile mit gleicher Geschwindigkeit abgeführt werden. Dabei kann gewährleistet werden, dass die Temperaturdifferenz innerhalb einer Zelle und innerhalb eines Moduls einen zellspezifischen Wert nicht übersteigt. Somit bietet der erfindungsgemäße Ansatz eine optimierte Methode für die Kühlung von Zellen mit "hartem" Gehäuse, in der Regel von prismatischen oder zylindrischen Zellen mit Aluminium-Gehäuse.

Die vorliegende Erfindung schafft einen Wärmetauscher zur Kühlung mindestens einer Energiespeicherzelle, mit folgenden Merkmalen: einer ersten Gehäusefläche, die mindestens eine erste Öffnung aufweist; einer zweiten Gehäusefläche, die mindestens eine zweite Öffnung aufweist, wobei die zweite Gehäusefläche der ersten Gehäusefläche und die zweite Öffnung der ersten Öffnung gegenüberliegend angeordnet ist; und mindestens einem Schachtprofil, das mit einem umlaufenden Randbereich der ersten Öffnung und mit einem umlaufenden Randbereich der zweiten Öffnung verbunden ist und sich zwischen der ersten und der zweiten Gehäusefläche erstreckt, um eine Wand eines Aufnahmeschachts für eine Energiespeicherzelle zu bilden, wobei das Schachtprofil in einem zwischen der ersten und der zweiten Gehäusefläche liegenden Bereich eine elastische Wölbung in Richtung eines Inneren des Aufnahmeschachts aufweist.

Bei der Energiespeicherzelle kann es sich um ein galvanisches Element handeln. Die Energiespeicherzelle kann beispielsweise in einem Elektrofahrzeug oder einem Hybridfahrzeug eingesetzt werden. Der Wärmetauscher weist ein Gehäuse auf, bei dem die erste Gehäusefläche und die zweite Gehäusefläche gegenüberliegend angeordnet sind. Das Gehäuse weist einen oder eine Mehrzahl von Aufnahmeschächten auf, die Durchgangslöcher durch das Gehäuse bilden. Jeder der Aufnahmeschächte wird durch eine erste Öffnung, eine zweite Öffnung und ein Schachtprofil gebildet. Somit bilden die Aufnahmeschächte Säulen zwischen der ersten und der zweiten Gehäusefläche. Das Schachtprofil kann aus einem anderen Material als die Gehäuseflächen bestehen und nachträglich mit diesem verbunden worden seien. Dazu kann das Schachtprofil mit den Öffnungen beispielsweise jeweils mittels einer stoffschlüssigen oder einer formschlüssigen Verbindungstechnik verbunden worden sein. Die Öffnungen können in ihrer Querschnittsfläche an eine Querschnittsfläche der aufzunehmenden Energiequelle angepasst sein. Beispielsweise können die Öffnungen einen runden Querschnitt oder einen rechteckigen Querschnitt aufweisen. Entsprechend dazu kann eine Querschnittsfläche des Schachtprofils an die Querschnittsfläche der Öffnungen angepasst sein. Jeder der Aufnahmeschächte ist ausgebildet, um eine oder auch mehrere Energiespeicherzellen aufzunehmen. Die Energiespeicherzelle kann dazu in den Aufnahmeschacht eingeführt werden und bündig mit der ersten Gehäusefläche und der zweiten Gehäusefläche abschießen oder über die erste, die zweite oder beide Gehäuseflächen hinausragen. Das Gehäuse kann weitere Gehäuseflächen aufweisen, die an die erste Gehäusefläche und die zweite Gehäusefläche angrenzen, um das Gehäuse nach außen abzuschließen. Die elastische Wölbung kann sich über einen Teilbereich oder über eine gesamte Länge des Schachtprofils erstrecken. Ist eine Energiespeicherzelle in einem Aufnahmeschacht angeordnet, so drückt sie mit ihrer Seitenfläche gegen die elastische Wölbung und verformt diese. Durch die Verformung der elastischen Wölbung entsteht eine Rückstellkraft, mit der die elastische Wölbung gegen die Seitenfläche der Energiespeicherzelle drückt. Dadurch wird die Energiespeicherzelle mechanisch in den Aufnahmeschacht fixiert. Zudem wird zwischen der elastischen Wölbung und der Seitenfläche der Energiespeicherzelle eine Kontaktfläche ausgebildet, über die eine thermisch leitfähige Verbindung zwischen dem Wärmetauscher und der Energiespeicherzelle besteht.

Somit kann ein Innendurchmesser des Aufnahmeschachts im Bereich der elastischen Wölbung kleiner als ein korrespondierender Außendurchmesser der Energiespeicherzelle sein. Auf diese Weise kann die elastische Wölbung eine Haltekraft auf die Energiespeicherzelle ausüben und eine thermische Verbindung zu der Energiespeicherzelle ausbilden, wenn die Energiespeicherzelle in dem Aufnahmeschacht angeordnet ist. Der korrespondierende Außendurchmesser ist ein Außendurchmesser der Energiespeicherzelle in dem Bereich, der der elastischen Wölbung gegenüberliegt, wenn die Energiespeicherzelle in dem Aufnahmeschacht angeordnet ist. Der Bereich, in dem der Innendurchmesser des Aufnahmeschachts kleiner als der korrespondierender Außendurchmesser der Energiespeicherzelle ist, kann sich beispielsweise über ein Drittel, die Hälfte oder zwei Drittel der Länge des Aufnahmeschachts erstrecken. Dieser Bereich kann mittig in Bezug auf die Länge des Aufnahmeschachts angeordnet sein.

Beispielsweise kann das mindestens eine Schachtprofil in dem zwischen der ersten und der zweiten Gehäusefläche liegenden Bereich durchgehend gebogen sein, um die elastische Wölbung auszubilden. Die elastische Wölbung kann durch eine Verformung des Schachtprofils erzeugt werden, die sich durch die starre Verbindung des Schachtprofils mit den Öffnungen ergibt. Alternativ oder zusätzlich kann das Schachtprofil bereits vor der Verbindung mit den Öffnungen gebogen sein.

Gemäß einer Ausführungsform ist das mindestens eine Schachtprofil mit den umlaufenden Randbereichen der mindestens einen ersten Öffnung und der mindestens einen zweiten Öffnung durchgängig und fluiddicht verbunden. Dies ermöglicht es, dass ein Zwischenraum zwischen den Gehäuseflächen von einem Fluid durchströmt wird. Dadurch kann die Wärmeabfuhr über die Schachtprofile erhöht werden.

Dazu kann der Wärmetauscher einen ersten Fluidanschluss zum Zuführen eines Fluids und einen zweiten Fluidanschluss zum Abführen des Fluids aufweisen. Die Fluidanschlüsse können so angeordnet sein, dass das Fluid die Wand des mindestens einen Aufnahmeschachts in einem Bereich zwischen der ersten und der zweiten Gehäusefläche umströmen kann. Über die Fluidanschlüsse kann der Wärmetauscher an einen Kühlkreislauf angeschlossen werden.

Gemäß einer Ausführungsform können die Gehäuseflächen aus Kunststoff und das mindestens eine Schachtprofil aus Metall sein. Durch den Kunststoff kann Gewicht gespart werden. Das Metall bietet eine hohe Wärmeleitfähigkeit. Dabei kann das mindestens eine Schachtprofil ein Rohr sein, Je nach Querschnittsfläche der Energiequelle kann es sich dabei um ein Rundrohr oder um ein Flachrohr handeln. Alternativ kann das mindestens eine Schachtprofil aus mehreren separaten Profilabschnitten zusammengesetzt sein.

Vorteilhafterweise kann der Wärmetauscher eine Anzahl erster Öffnungen, eine der Anzahl erster Öffnungen entsprechende Anzahl zweiter Öffnungen und eine der Anzahl erster Öffnungen entsprechenden Anzahl von Schachtprofilen aufweisen, um eine der Anzahl erster Öffnungen entsprechende Anzahl von Aufnahmeschachten für eine der Anzahl erster Öffnungen entsprechende Anzahl von Energiespeicherzellen zu bilden. Die Aufnahmeschächte können gleichmäßig über die Gehäuseflächen verteil sein, Beispielsweise können die Aufnahmeschächte in mehreren Reihen und mehreren Spalten angeordnet sein, wobei benachbarte Aufnahmeschächte versetzt zueinander angeordnet sein können. Ein Abstand zwischen zwei benachbarten Aufnahmeschächten kann so gewählt sein, dass zum einen eine optimale Warmeabfuhr gewährleistet wird und zum anderen eine möglichst große Anzahl von Energiespeicherzellen auf einer möglichst geringen Fläche angeordnet werden können.

Der erfindungsgemäße Wärmetauscher kann die mindestens eine Energiespeicherzelle aufweisen. Die Energiespeicherzelle kann in dem Aufnahmeschacht angeordnet sein und durch die elastische Wölbung in Position gehalten werden. Somit wird ein komplettes Energiespeichersystem geschaffen. Die Energiespeicherzelle kann eine Klammer aufweisen, die sich entlang gegenüberliegender Seitenflächen der Efiergiespeicherzelle erstreckt. Somit kann sich ein Tell der Klammer zwischen den Seitenflächen der Energiespeicherzelle und der Wand des Aufnahmeschachts befinden. Die Klammer kann eine zusätzliche Fixierung der Energiespeicherzelle in dem Aufnahmeschacht ermöglichen. Dazu kann die Klammer beispielsweise Haken aufweisen.

Die vorliegende Erfindung schaff ferner ein Verfahren zum Herstellen eines Wärmetauschers zur Kühlung mindestens einer Energiespeicherzelle, das die folgenden Schritte umfasst: Bereitstellen eines Gehäuses mit einer ersten Gehäusefläche, die mindestens eine erste Öffnung aufweist und einer zweiten Gehäusefläche, die mindestens eine zweite Öffnung aufweist, wöbei die zweite Gehäusefläche der ersten Gehäusefläche, und die zweite Öffnung der ersten Öffnung gegenüberliegend angeordnet ist; Einführen eines Schachtprofils in die mindestens eine erste und mindestens eine zweite Öffnung, so dass sich das Schachtprofil zwischen der ersten und der zweiten Gehäusefläche erstreckt, um eine Wand eines Aufnahmeschachts für eine Energiespeicherzelle zu bilden, wobei ein Durchmesser der ersten und der zweiten Öffnung jeweils größer als ein Außendurchmesser des Schachtprofils ist, so dass ein umlaufender Randbereich der ersten Öffnung und ein umlaufender Randbereich der zweiten Öffnung zumindest teilweise von dem Schachtprofil beabstandet ist; und Durchgängiges Verbinden des Schachtprofils mit dem umlaufenden Randbereich der ersten Öffnung und dem umlaufenden Randbereich der zweiten Öffnung, so dass das Schachtprofil in einem zwischen der ersten und der zweiten Gehäusefläche liegenden Bereich eine elastische Wölbung in Richtung eines Inneren des Aufnahmeschachts aufweist,

Vorteilhafterweise kann die elastische Wölbung durch das Verbinden des Schachtprofils mit den Gehäuseflächen erzeugt werden, so dass keine Vorbiegung für das Schachtprofil erforderlich ist.

Vorteilhafte Ausführungsbeispiele der vorliegenden Erfindung werden nachfolgend Bezug nehmend auf die beiliegenden Zeichnungen näher erläutert Es zeigen:
- Fig. 1: eine Darstellung eines erfindungsgemäßen Wärmetauschers von oben;
- Fig. 2: eine Vorderansicht eines erfindungsgemäßen Wärmetauschers;
- Fig. 3: eine Seitenansicht eines erfindungsgemäßen Wärmetauschers;

- Fig. 4: eine Seitenansicht eines erfindungsgemäßen Wärmetauschers mit einer Energiespelcherzelle;
- Fig. 5: eine Vorderansicht eines erfindungsgemäßen Wärmetauschers mit einer Energiespeicherzelle;
- Fig. 6: eine Darstellung eines Gehäuses eines erfindungsgemäßen Wärmetauschers;
- Fig. 7: eine Dastellung eines Verteilers eines erfindungsgemäßen Wärmestauschers;
- Fig. 8: eine Darstellung eines Sammlers eines erfindungsgemäßen Wärmetauschers;
- Fig. 9: eine Seitenansicht eines erfindungsgemäßen Wärmetauschers;
- Fig. 10: eine Seitenansicht eines erfindungsgemäßen Wärmetauschers mit einer Energiespeicherzelle;
- Fig. 11: eine Vorderansicht eines erfindungsgemäßen Wärmetauschers; und
- Fig. 12: eine Detaildarstellung eines erfindungsgemäßen Wärmetauschers.

In der nachfolgenden Beschreibung der bevorzugten Ausführungsbeispiele der vorliegende Erfindung werden für die in den verschiedenen Zeichnungen dargestellten und ähnlich wirkenden Elemente gleiche oder ähnliche Bezugszeichen verwendet, wobei eine wiederholte Beschreibung dieser Elements wegge-lassen wird,

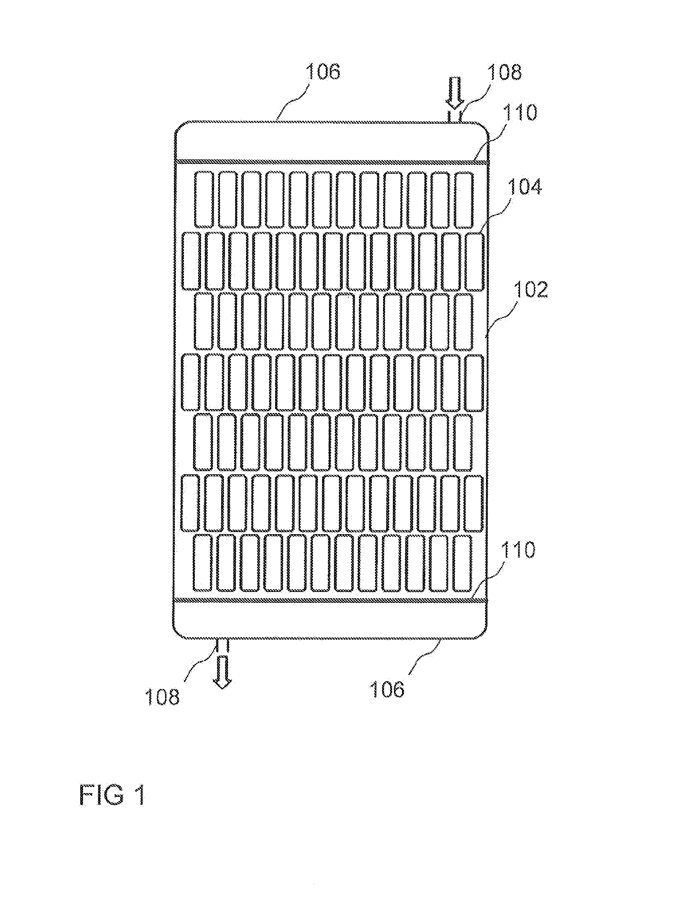

Fig. 1 zeigt eine Darstellung eines erfindungsgemäßen Wärmetauschers von oben, gemäß einem Ausführungsbeispiel der vorliegenden Erfindung. Der Wärmetauscher weist ein Gehäuse auf, von dem in der in Fig. 1 dargestellten Ansicht eine erste Gehäusefläche 102 gezeigt ist. Die erste Gehäusefläche 102 weist eine Mehrzahl erster Öffnungen 104 auf, von denen der Übersichtlichkeit halber lediglich eine Öffnung mit einem Bezugszeichen 104 versehen ist. Jede der ersten Öffnungen 104 ist jeweils Teil eines Aufnahmeschachts zum Aufnehmen einer Energiespeicherzelle. Die ersten Öffnungen 104 weisen eine rechteckige Querschnittsfläche auf. Die ersten Öffnungen 104 sind in einer Mehrzahl von Spalten und in einer Mehrzahl von Reihen angeordnet. Gemäß diesem Ausführungsbeispiel sind die ersten Öffnungen 104 in sieben Spalten angeordnet, die alternierend jeweils 12 und 13 Öffnungen 104 aufweisen. Die ersten Öffnungen 104 sind in Bezug auf benachbarte Spalten versetzt zueinander angeordnet Der Wärmetauscher weist zwei Sammler 108 auf, die an gegenüberliegenden Enden des Wärmetauschers angeordnet sind. Die Sammler 106 bilden Behälter, die jeweils einen Fluidanschluss 108 aufweisen. Gemäß diesem Ausführungsbeispiele kann ein Fluid über den in Fig. 1 oben gezeigten Fluidanschluss 108 in den Sammler 106 einströmen und über einen Verteiler 110 in das Gehäuse des Wärmetauschers strömen, An dem in Fig. 1 unten dargestellten Ende des Wärmetauschers kann das Fluid aus dem Gehäuse über einen weiteren Verteiler 110 in den zweiten Sammler 106 einströmen und aus dem Fluidanschluss 108 dieses Sammlers 106 aus dem Wärmetauscher herausströmen.

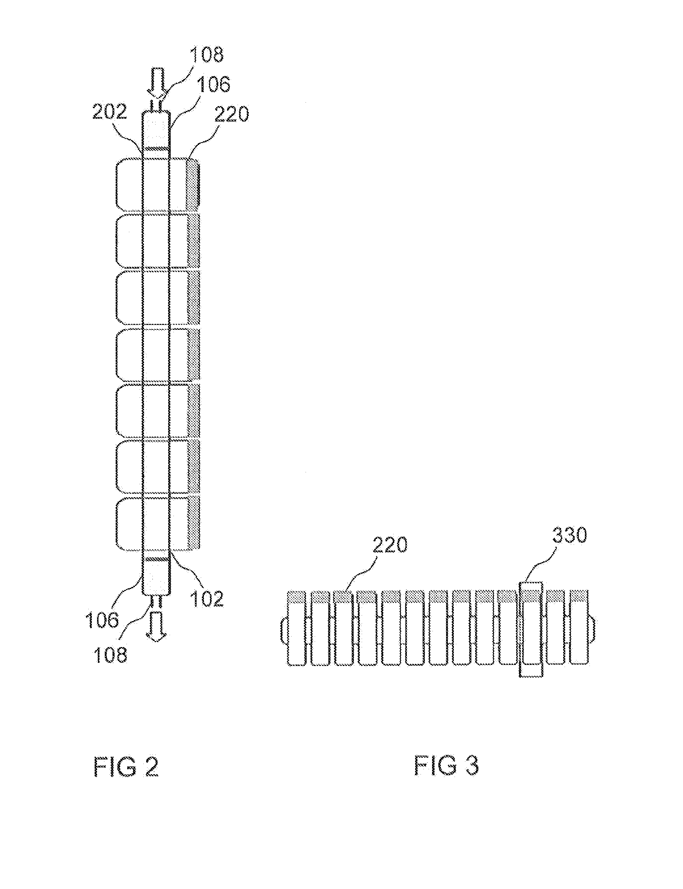

Fig. 2 zeigt eine Vorderansicht des in Fig. 1 gezeigten Wärmetauschers. Gezeigt sind eine Anordnung der ersten Gehäusefläche 102 und einer gegenüberliegenden zweiten Gehäuseflache 202. Die erste Gehäusefläche 102 und die zweite Gehäusefläche 202 sind parallel und beabstandet zueinander angeordnet. In den Aufnahmeschächten des Wärmetauschers ist jeweils eine Energiespeicherzelle 220 angeordnet, von denen der Übersichtlichkeit halber nur eine mit einem Bezugszeichen 220 versehen ist. Gemäß diesem Ausführungsbeispiel ragen die Energiespeicherzellen 220 jeweils über die erste Gehäusefläche 102 und die zweite Gehäusefläche 202 hinaus. Der Wärmetauscher ist in etwa mittig in Bezug auf eine Höhe der Energiespeicherzellen 220 angeordnet.

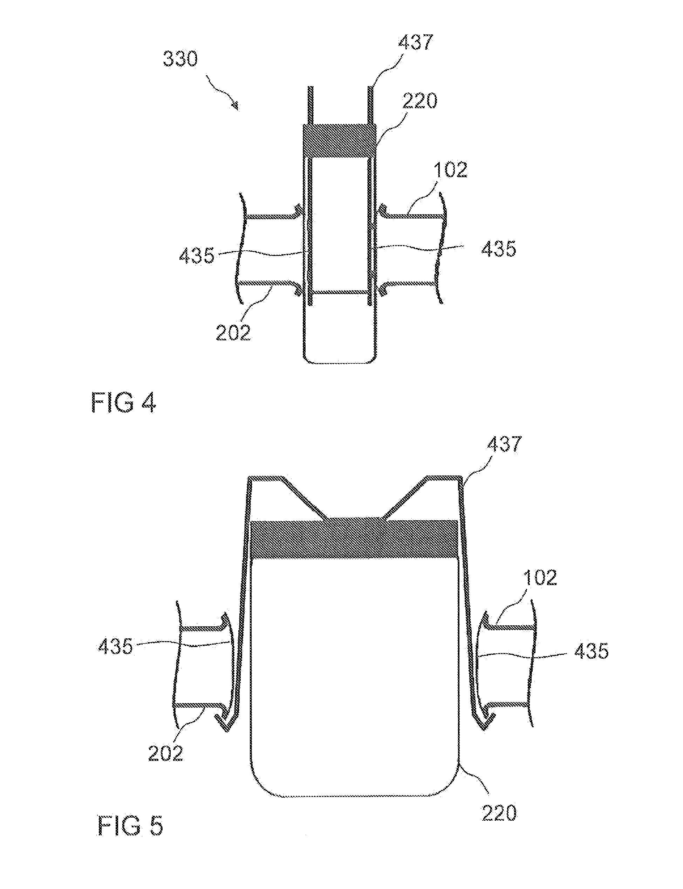

Fig. 3 zeigt eine Seitenansicht des in Fig. 1 gezeigten Wärmetauschers, In den Aufnahmeschächten des Wärmetauschers ist jeweils eine Energiespeicherzelle 220 angeordnet, von denen der Übersichtlichkeit halber nur eine mit einem Bezugszeichen versehen ist. Gemäß diesem Ausführungsbeispiel ragen die Energiespeicherzellen 220 jeweils über die erste Gehäusefläche 102 und die zweite Gehäusefläche 202 hinaus. Der Wärmetauscher ist in etwa mittig in Bezug auf eine Höhe der Energiespeicherzellen 220 angeordnet. Ein Ausschnitt 330 ist in Fig. 4 vergrößert dargestellt,

Fig. 4 zeigt den Ausschnitt 330 aus Fig. 3. Gezeigt ist eine Seitenansicht des Wärmetauschers mit einer Energiespeicherzelle 220. Die Energiespeicherzelle 220 ist in einem Aufnahmeschacht des Wärmetauschers angeordnet. Der Aufnahmeschacht wird durch zwei gegenüberlilegende Öffnungen oder Durchzüge in der ersten Gehäusefläche 102 und der zweiten Gehäusefläche 202 ausgebildet, Die Durchzüge können der Wandung der Gehäuseflächen 102, 202 im Bereich der Öffnungen entsprechen. Die Öffnungen der Gehäuseflächen 102, 202 sind über ein Schachtprofil 435 verbunden. Die Randbereiche der Gehäuseflächen 102, 202 sind nach außen gebogen, Das Schachtprofil 435 ist an den Randbereichen mit den Gehäuseflächen 102, 202 verbunden, Das Schachtprofil 435 weist eine Wölbung ins Innere des Schachtprofils 435 auf. Somit weist das Schachtprofil 435 an den Randbereichen eine größere Querschnittsfläche als dazwischen auf. Die kleinste Querschnittsfläche weist das Schachtprofil 435 ungefähr in der Mitte zwischen der ersten und zweiten Gehäusefläche 102, 202 auf. Die Energiespeicherzelle 220 weist entlang der in Fig. 4 gezeigten Schmalseite einen größeren Durchmesser auf, als das Schachtprofil 435 im Bereich der kleinsten Querschnittsfläche. Somit hat die Zelle 220 eine Übergröße. Somit entsteht ein thermischer Kontakt unter Druck zwischen den Seitenflächen der Zelle 220 und dem Schachtprofil 435. Die Energiespeicherzelle 220 weist Klammern 437 oder Ähnliches auf.

Fig. 5 zeigt den Ausschnitt 330 aus Fig. 3 in einer Vorderansicht. Gezeigt Ist ein Ausschnitt des Wärmetauschers mit einer Energiespeicherzelle 220. Die Energiespeicherzelle 220 ist in einem Aufnahmeschacht des Wärmetauschers angeordnet. Der Aufnahmeschacht ist wie in Fig. 4 beschrieben ausgebildet. Die Zelle 220 weist entlang der in Fig. 5 gezeigten Breitseite einen geringeren Querschnitt auf, als das Schachtprofil an seiner schmalsten Stelle. Somit weist die Zelle 220 eine Untergröße auf. Für eine korrekte Positionierung sind Klammern oder Einrasthaken vorgesehen. Gemäß diesem Ausführungsbeispiel ist eine Klammer 437 an einer Oberseite der Energiespeicherzelle 220 befestigt und erstreckt sich beidseitig entlang der Energiespeicherzelle 220. Die Klammer 437 weist beidseitig an Endabschnitten nach außen gebogene Haken auf, die sich mit den Randbereichen der Öffnung in der zweiten Gehäusefläche 202 verhaken.

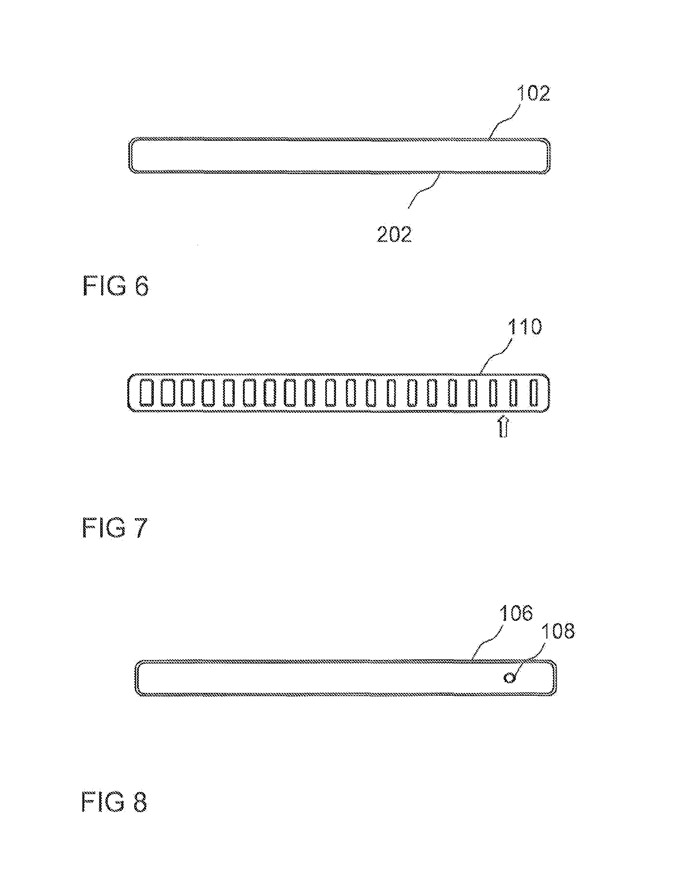

Fig. 6 zeigt eine Querschnittsdarstellung des Gehäuses (cooler can) des in Fig. 1 gezeigten mit der ersten und der zweiten Gehäusefläche 102, 202. Das Gehäuse kann beispielsweise aus Kunststoff bestehen.

Fig. 7 zeigt eine Querschnittsdarstellung eines Verteilers 110 (Header) des in Fig. 1 gezeigten Wärmetauschers. Der Verteiler 110 weist eine Mehrzahl von Öffnungen auf, deren Querschnitt umso größer wird, je weiter sie von der Eintrittsöffnung des Fluid beabstandet sind. Der Verteiler 110 kann beispielsweise aus Kunststoff bestehen.

Fig. 8 zeigt eine eines Sammlers 106 (tank) eines erfindungsgernaßen Wärmetauschers mit der Eintrittsöffnung 108 für das Fluid.

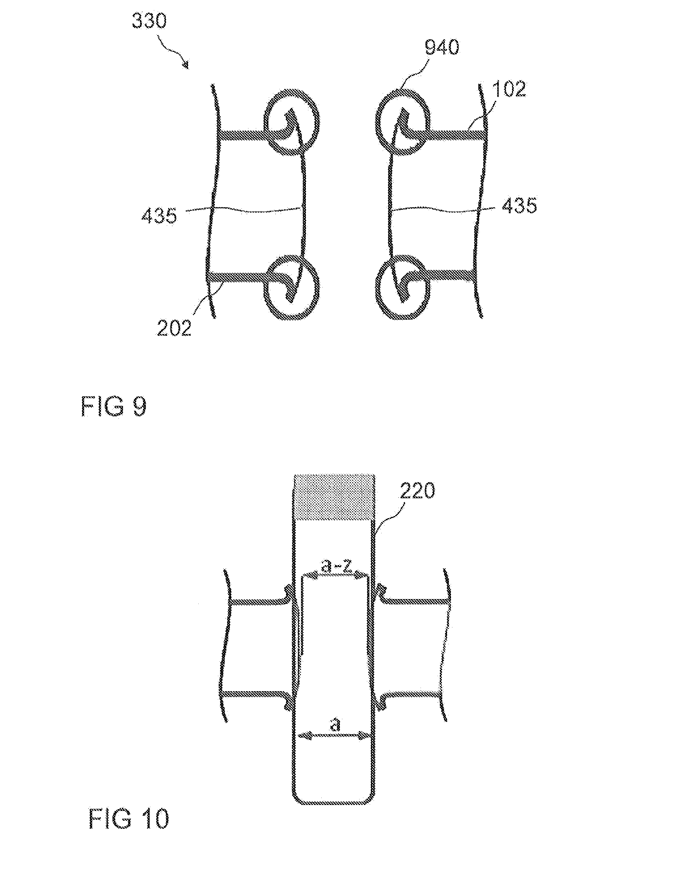

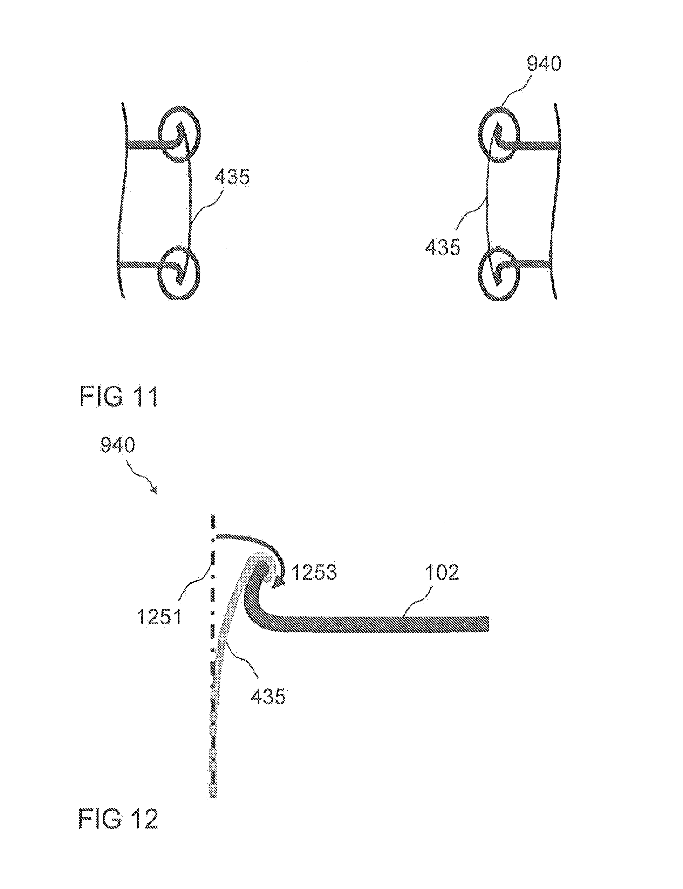

Fig. 9 zeigt den Ausschnitt 330 aus Fig. 3 ohne Energiespeicherzelle. Gezeigt ist eine Seitenansicht eines Aufnahmeschachts des Wärmetauschers. Der Aufnahmeschacht wird durch zwei gegenüberliegende Öffnungen oder Durchzüge in der ersten Gehäusefläche 102 und der zweiten Gehäusefläche 202 ausgebildet, die über ein Schachtprofil 435 verbunden sind, Das Schachtprofil 435 (cell slot chamber profile) kann beispielsweise aus Aluminium bestehen. Ein Ausschnitt 940 ist in Fig. 12 vergrößert dargestellt

Fig. 10 zeigt den Ausschnitt 330 aus Fig. 3 mit der Energiespeicherzelle 220. Gezeigt ist eine Breite a des Gehäuses der Zelle 220 und eine minimale Breite a-z des Aufnahmeschachts. Eine Überschneidung z kann über einen Kreisumfang des Aufnshmeschachts variieren, beispielsweise zwischen der Vorderansicht und der Seitenansicht. Somit kann der Aufnahmeschacht an seiner engesten Stelle beispielsweise einen kleineren Durchmesser als die Schmalseite jedoch einen größeren Durchmesser als die Breitseite der Energiespeicherzelle aufweisen

Fig. 11 zeigt den Ausschnitt 330 aus Fig. 3 in einer Vorderansicht, ohne eine Energiespeicherzelle. Ein durch die Gehäuseflächen 102, 202 gebildetes Kühlergehäuse kann beispielsweise aus Kunststoff bestehen.

Fig. 12 zeigt eine vergrößerte Darstellung des in den Figuren 9 und 11 umrandet dargestellten Ausschnitts 940. Gezeigt ist die erste Gehäusefläche 102 des Kühlergehäuses, das beispielsweise aus Plastik bestehen kann, und das Schachtprofil 435. Das Schachtprofil 435 kann als Röhre, beispielsweise aus Aluminium, ausgeführt sein. Durch das Bezugszeichen 1251 ist eine Position des Kammerprofils 435 vor dem Einfalzen 1253 (crimping) angedeutet. Durch das Einfalzen 1253 wird eine fluiddichte Verbindung geschaffen. Die fluiddichte Verbindung kann neben Falzen beispielsweise auch durch Löten, Schweißen oder anderen Verbindungstechniken hergestellt werden. Die fluiddichte Verbindung kann durch Form-, Kraftschluss oder durch ein thermisches oder chemisches Fügeverfahren entstehen.

Im Folgenden wird der Wärmetauscher gemäß einem Ausführungsbeispiel der Erfindung detailliert beschrieben. Gemäß diesem Ausführungsbeispiel werden gezielt nur die Bauteile, aus Metall, in der Regel aus Aluminium, hergestellt, welche für den Warmetransport benötigt werden, d.h. hier die Schachtprofile 435, welche in direktem Kontakt zu den Zellen 220 stehen. Die Schachtprofile 435 können z.B. dünnwandige Rohre in flacher oder runder Bauweise sein, Diese werden durch ein Kühlergehäuse 102, 202 aus Kunststoff in dafür vorgesehenen Öffnungen durchgeschoben. Die Ränder dieser Öffnungen besitzen auf beiden Seiten eine Durchzugs-Verprägung 1253. Zudem sind die Öffnungen zumindest partiell etwas größer als die Außenabmessungen der Schachtprofile. Mittels eines Dorns werden die Enden der Schachtprofile gegen die Ränder der Öffnungen verpresst und durch geeignete Verbindungstechniken, wie Kleben, Umfalzen, Bördeln, Löten, Schweißen, etc. mit dem Durchzug der Öffnung dauerhaft und dicht verbunden.

Durch diesen Prozess, bei dem nur die Enden der Schachtprofile 435 auf das Öffnungsmaß gebracht werden, bleibt der Schachtquerschnitt in der Mitte des Kühlers nahezu unverändert. Das Schachtprofil 435 wird über die Dicke des Kühlers elastisch verwölbt und weißt in der Mitte des Kühlers mindestens eine Engstelle auf.

Das lichte Maß dieser Engstelle ist etwas kleiner als die Außenabmessung der Zelle 220, so dass beim Einschieben der Zelle 220 durch diese Öffnung das Schachtprofil 435 an das starre Zellgehäuse angepresst wird und so für einen guten Wärmeübergang sorgt.

Im gesamten Batteriekühler befinden sich die für die Batterieleistung erforderliche Anzahl an Zelleinschüben z.B, in versetzter Matrixanordnung. Durch den Matrix-Versatz kann so für eine ausreichende Durchmischung des Kühlfluids in Strömungsrichtung gesorgt werden.

Am vorderen und hinteren Ende des Kühlers wird ein Kunststofftank 106 inklusiv Boden 110, beides z.B. aus Kunststoff, durch geeignete Verfahren, z.B. Vibrationsschweißen, mit dem Kühlergehäuse dauerhaft und dicht verbunden. Die Durchströmung des Kühlers kann durch die Verteilung der Öffnungen im Boden 110 optimiert werden.

Die Fixierung des Kühlers kann über Klemmbacken an den Längsseiten des Kühlers erfolgten. Die Fixierung der Lage der Zellen 220 innerhalb des Kühlers erfolgt mittels Klammern 437. Bei liegendem Einbau des Kühlers kann auf diese zusätzlichen Klammern verzichtet werden, wenn in Graviationsrichtung ein profilierter Boden vorgesehen wird, deren Mulden die Böden der Zellen 220 entsprechend aufnehmen. Dadurch wird ein Verkannten der Zellen 220 im Kühler verhindert. Das Herausspringen der Zellen 220 aus dem Kühler ist durch die Klemmwirkung im Zelleinschub ebenfalls ausreichend behindert.

Bei dem erfindungsgemäßen Konzept ist insbesondere die Verbindung zwischen Schachtprofil und Kühlergehäuse als kritisch zu sehen. Z.B. treten bei der Verbördelung hohe plastische Verformung im Schachtprofil auf, welche zum Versagen des Materials während der Montage oder des Betriebs führen kann. Dennoch muss die Verbindung dauerhaft dicht sein. Ein Versagen der Verbindung ist deshalb unbedingt auszuschließen. Um dies prozesssicher darzustellen, kann die Form des Schachtprofils 435 besonders an den schmalen Seiten optimiert werden.

Gemäß einem Ausführungsbeispiel erfolgt ein Einbringen zusätzlicher Schichten, z.B. von Wärmeleitfolien, zwischen dem Schachtprofil 435 und dem Zellgehäuse zur Optimierung des Wärmeflusses. Auch kann die Einbringung der Wölbung im Schachtprofil 435 nicht durch elastische Verformung während des Montageprozesses sondern durch Produktion von kontrolliert plastisch verformten Halbzeugen erfolgen.

Die beschriebenen Ausführungsbeispiele sind nur beispielhaft gewählt und können miteinander kombiniert werden.

## Patentansprüche

1. Wärmetauscher zur Kühlung mindestens einer Energiespeicherzelle (220), mit folgenden Merkmalen:
einer ersten Gehäusefläche (102), die mindestens eine erste Öffnung aufweist;
einer zweiten Gehäusefläche (202), die mindestens eine zweite Öffnung aufweist, wobei die zweite Gehäusefläche der ersten Gehäusefläche und die zweite Öffnung der ersten Öffnung gegenüberliegend angeordnet ist; und
mindestens einem Schachtprofil (435), das mit einem umlaufenden Randbereich der ersten Öffnung und mit einem umlaufenden Randbereich der zweiten Öffnung verbunden ist und sich zwischen der ersten und der zweiten Gehäusefläche erstreckt, um eine Wand eines Aufnahmeschachts für eine Energiespeicherzelle zu bilden, wobei das Schachtprofil in einem zwischen der ersten und der zweiten Genäusefläche liegenden Bereich eine elastische Wölbung in Richtung eines Inneren des Aufnahmeschachts aufweist.

2. Wärmetauscher gemäß Anspruch 1, bei dem ein innendurchmesser (a-z) des Aufnahmeschachts im Bereich der elastischen Wölbung kleiner als ein korrespondierender Aüßendurchmesser (a) der Energiespeicherzelle (220) ist, so dass die elastische Wölbung eine Haltekraft auf die Energiespeicherzelle ausübt und eine thermische Verbindung zu der Energiespeicherzelle ausbildet, wenn die Energiespeicherzelle in dem Aufnahmeschacht angeordnet ist.

3. Wärmetauscher gemäß einem der vorangegangenen Ansprüche, bei dem das mindestens eine Schachtprofil (435) in dem zwischen der ersten und der zweiten Gehäusefläche (102, 202) liegenden Bereich durchgehend gebogen ist, um die elastische Wölbung auszubilden.

4. Wärmetauscher gemäß einem der vorangegangenen Ansprüche, bei dem das mindestens eine Schachtprofil (435) mit den umlaufenden Randbereichen der mindestens einen ersten Öffnung und der mindestens einen zweiten Öffnung durchgängig und fluiddicht verbunden ist.

5. Wärmetauscher gemäß einem der vorangegangenen Ansprüche, mit einem ersten Fluidanschluss (108) zum Zuführen eines Fluids und einem zweiten Fluidanschluss (108) zum Abführen des Fluids, wobei die Fluidanschlüsse so angeordnet sind, das das Fluid die Wand des mindestens einen Aufnahmeschachts in einem Bereich zwischen der ersten und der zweiten Gehäusefläche (102, 202) umströmen kann.

6. Wärmetauscher gemäß einem, der vorangegangenen Ansprüche, bei dem die Gehäuseflächen (102, 202) aus Kunststoff und das mindestens eine Schachtprofil (435) aus Metall sind.

7. Wärmetauscher einem der vorangegangenen Ansprüche, bei dem das mindestens eine Schachtprofil (435) ein Rohr ist.

8. Wärmetauscher gemäß einem der vorangegangenen Ansprüche, mit einer Anzahl erster Öffnungen, einer der Anzahl erster Öffnungen entsprechenden Anzahl zweiter Öffnungen und einer der Anzahl erster Öffnungen entsprechenden Anzahl von Schachtprofilen (435), um eine der Anzahl erster Öffnungen entsprechende Anzahl von Aufnahmeschächten für eine der Anzahl erster Öffnungen entsprechende Anzahl von Energiespeicherzellen (220) zu bilden.

9. Wärmetauscher gemäß einem der vorangegangenen Ansprüche, mit der mindestens einen Energiespeicherzelle (220), die in dem Aufnahmeschacht angeordnet ist und durch die elastische Wölbung in Position gehalten wird.

10. Verfahren zum Herstellen eines Wärmetauschers zur Kühlung mindestens einer Energiespeicherzelle (220), das die folgenden Schritte umfasst:
Bereitstellen eines Gehäuses mit einer ersten Gehäusefläche (102), die mindestens eine erste Öffnung aufweist und einer zweiten Gehäusefläche (202), die mindestens eine zweite Öffnung aufweist, wobei die zweite Gehäusefläche der ersten Gehäusefläche und die zweite Öffnung der ersten Öffnung gegenüberliegend angeordnet ist:
Einführen eines Schachtprofils (435) in die mindestens eine erste und mindestens eine zweite Öffnung, so dass sich das Schachtprofil zwischen der ersten und der zweiten Gehäusefläche erstreckt, um eine Wand eines Aufnahmeschachts für eine Energiespeicherzelle zu bilden, wobei ein Durchmesser der ersten und der zweiten Öffnung jeweils größer als ein Außendurchmesser des Schachtprofils ist, so dass ein umlaufender Randbereich der ersten Öffnung und ein umlaufender Randbereich der zweiten Öffnung zumindest teilweise von dem Schachtprofil beabstandet ist; und
Durchgängiges Verbinden (1253) des Schachtprofils mit dem umlaufenden Randbereich der ersten Öffnung und dem umlaufenden Randbereich der zweiten Öffnung, so dass das Schachtprofil in einem zwischen der ersten und der zweiten Gehäusefläche liegenden Bereich eine elastische Wölbung in Richtung eines Inneren des Aufnahmeschachts aufweist.
